# EUROPÄISCHE PATENTSCHRIFT

(11) **EP 3 232 454 B1**
(45) Veröffentlichungstag und Bekanntmachung des Hinweises auf die Patenterteilung: **06.03.2019**
(21) Anmeldenummer: 17165223.3
(22) Anmeldetag: 06.04.2017
(51) Int. Cl.: H01G 4/38, H01G 4/232, H01G 2/06, H01G 2/02, H01G 4/32

(54) **BUSBAR MIT EINER MEHRZAHL VON FILMKONDENSATOREN**
BUSBAR WITH A PLURALITY OF FILM CONDENSATORS
BARRE OMNIBUS COMPRENANT UNE PLURALITÉ DE CONDENSATEURS À FILM

(30) Priorität: 13.04.2016 DE 102016106835
(43) Veröffentlichungstag der Anmeldung: 18.10.2017
(73) Patentinhaber: F&T Fischer & Tausche Holding GmbH & Co. KG, 25813 Husum (DE)
(72) Erfinder: FISCHER, Peter, 25873 Oldersbek (DE)
(74) Vertreter: Lobemeier, Martin Landolf

(56) Entgegenhaltungen:
- WO-A2-2011/018434
- DE-A1- 3 436 898
- DE-A1-102009 047 763
- DE-A1-102011 088 250
- DE-U1-202015 004 662
- US-A1- 2014 154 602

## Beschreibung

Die Erfindung betrifft eine elektronische Baugruppe mit einer Sammelschiene und wenigstens einem mit der Sammelschiene elektrisch leitend verbundenen Filmkondensator, wobei die Sammelschiene einen oberen Leiter und einen unterhalb des oberen Leiters parallel zu diesem angeordneten unteren Leiter aufweist, der Filmkondensator einen mit dem oberen Leiter verbundenen ersten Anschluss und einen mit dem unteren Leiter verbundenen zweiten Anschluss aufweist, und wobei der obere Leiter der Sammelschiene eine Aussparung zur Kontaktierung des zweiten Anschlusses des Filmkondensators mit dem unteren Leiter der Sammelschiene aufweist.

Eine derartige Baugruppe ist aus der WO 2011/018434 A2 sowie aus offenkundiger Vorbenutzung bekannt.

Der grundsätzliche Aufbau der bekannten elektronischen Baugruppe sieht vor, dass insbesondere eine Mehrzahl von auf einer plattenartigen Tragstruktur angeordneten Becherkondensatoren vorgesehen sind, wobei der Träger die Sammelschiene ist, deren Leiter übereinander angeordnete Ebenen ausbilden.

Dabei sind sowohl die untere Ebene als auch die obere Ebene aus einem elektrisch gut leitfähigen Material ausgebildet. Die Pole der Kondensatoren sind jeweils entweder mit der oberen Ebene oder der unteren Ebene verbunden, wobei die Ebenen einander gegenüber elektrisch isoliert sind.

Die Kondensatoren sind dabei als Filmkondensatoren ausgebildet und zeichnen sich durch einen rohrförmigen Becherkörper mit einem einen Becherboden ausbildenden Becher und einen von diesem aufgenommenen, durch zwei versetzt zueinander aufgewickelte metallisierte Filme gebildeten Kondensatorwickel aus. Der Kondensatorwickel wiederum weist eine auf dessen obere Stirnseite aufgebrachte obere Schoopschicht und eine auf dessen untere Stirnseite aufgebrachte untere Schoopschicht auf.

Grundsätzliches Problem bei dieser Ausbildung ist der elektrische Anschluss eines Kondensators an die als Tragstruktur ausgebildete Sammelschiene. Einerseits muss die Befestigung des Kondensators auf der Tragstruktur mechanisch fest, andererseits elektrisch gut leitend sein.

Die üblicherweise in der Sammelschiene vorgesehenen Löcher zum Durchführen der Anschlüsse des Kondensators und die Kontaktierung durch Verschraubung sind jedoch dem grundsätzlichen Aufbau der elektronischen Baugruppe geschuldete arbeitsaufwändige Maßnahmen und zudem korrosionsanfällig.

Aufgabe der Erfindung ist es daher, eine eine Sammelschiene und wenigstens einen Filmkondensator aufweisende elektronische Baugruppe zu schaffen, die eine einfache und sichere Befestigung des Kondensators auf der Sammelschiene ermöglicht und insgesamt einfach herzustellen ist.

Diese Aufgabe wird durch die elektronische Baugruppe mit den Merkmalen von Anspruch 1 gelöst. Die Unteransprüche geben vorteilhafte Ausgestaltungen der Erfindung wieder.

Grundgedanke der Erfindung ist es, die Verbindung der Kondensatoren mit der Sammelschiene mittels Durchsetzfügen (Clinchen) herzustellen. Hierzu werden die Anschlüsse der Kondensatoren als Metallzungen ausgebildet, wobei der obere Leiter der Sammelschiene eine Ausnehmung aufweist, durch die der eine Anschluss des Kondensators mit dem unteren Leiter in Verbindung treten kann.

Unter Clinchen wird hier ein auch als "Durchsetzfügen" bezeichnetes Umformverfahren bezeichnet, bei dem zwei zu verbindende Bleche (hier: Leiter und Anschlüsse) ähnlich wie bei dem Tiefziehen unter plastischer Deformation in eine Matrize gedrückt wird. Durch eine geeignete Gestaltung der Matrize entsteht eine bevorzugt druckknopfähnliche Form, die die Bleche form- und kraftschlüssig miteinander verbindet. Eine solche Verbindung erreicht oder übersteigt die Festigkeit einer entsprechenden Schweißverbindung, wobei der elektrische Übergang ausgezeichnet ist. Bevorzugt kann der elektrische Übergang durch ein Verzinnen der miteinander durch Clinchen zu verbindenden Bereiche weiter verbessert werden.

Die Verwendung einer Clinchverbindung ist aber nicht nur aufgrund der guten elektrischen Anbindung des Kondensators an die Leiter der Sammelschiene vorteilhaft. Die Clinchverbindung sorgt auch für eine gewisse mechanische Stabilität innerhalb der elektronischen Baugruppe.

Vorgesehen ist also eine elektronische Baugruppe mit einer Sammelschiene und wenigstens einem mit der Sammelschiene elektrisch leitend verbundenen Filmkondensator, wobei die Sammelschiene einen oberen Leiter und einen unterhalb des oberen Leiters parallel zu diesem angeordneten unteren Leiter aufweist, und der Filmkondensator einen mit dem oberen Leiter verbundenen ersten Anschluss und einen mit dem unteren Leiter verbundenen zweiten Anschluss aufweist. Erfindungsgemäß sind der erste Anschluss und der zweite Anschluss des Filmkondensators als sich vom Filmkondensator parallel zu den Leitern der Sammelschiene erstreckende Zungen ausgebildet sind, wobei der obere Leiter eine Aussparung zur Kontaktierung des zweiten Anschlusses mit dem unteren Leiter und wobei der dem Filmkondensator abgewandte Leiter im Bereich der Kontaktierung des ersten Anschlusses mit dem dem Filmkondensator zugewandten Leiter eine Aussparung zum Ansetzen eines Clinchwerkzeugs auf. Dabei wird das Clinchwerkzeug derart angesetzt, dass die Matrize dem jeweiligen Leiter anliegt und der Stempel gegen den jeweiligen als Zunge ausgebildeten Anschluss des Kondensators geführt wird. Dabei sind der erste Leiter mit dem ersten Anschluss und der zweite Leiter mit dem zweiten Anschluss jeweils mittels Durchsetzfügen miteinander verbunden.

Bevorzugt ist der Filmkondensator - wie vorstehend erläutert - als Becherkondensator ausgebildet. Dieser wird auf der Sammelschiene aufrecht angeordnet, d.h. dass die eine Stirnseite des Kondensators dem oberen Leiter zugewandt ist, sodass mehrere Kondensatoren platzsparend angeordnet werden können.

Weiter ist bevorzugt vorgesehen, dass der erste Anschluss und/oder der zweite Anschluss parallel zu den Leitern der Sammelschiene umgebogen sind. Die Leiter können zunächst parallel zur Längsachse aus dem Boden des Kondensators austreten, sind dann aber parallel zu den Leitern umgebogen, um eine Verbindung mittels eines Clinchwerkzeugs bestehend aus Stempel und Matrize herstellen zu können.

Nach einer besonderen Ausführung der Erfindung ist auch eine Mehrzahl von am Umfang des Filmkondensators alternierend angeordneten ersten und zweiten Anschlüssen vorgesehen. Beispielsweise können zwei erste Anschlüsse und zwei zweite Anschlüsse vorgesehen sein, die zueinander jeweils um 90° versetzt angeordnet sind. Dadurch wird eine hohe Stabilität der elektronischen Baugruppe erreicht.

Schließlich ist bevorzugt vorgesehen, dass die Zungen verzinnt sind, wodurch der elektrische Übergang verbessert ist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine perspektivische Ansicht einer elektronischen Baugruppe nach einem besonders bevorzugt ausgestalteten Ausführungsbeispiel; und
- Fig. 2: eine geschnittene Detailansicht im Bereich eines mit der Sammelschiene verbundenen Kondensators aus dem in Fig. 1 gezeigten Beispiel.

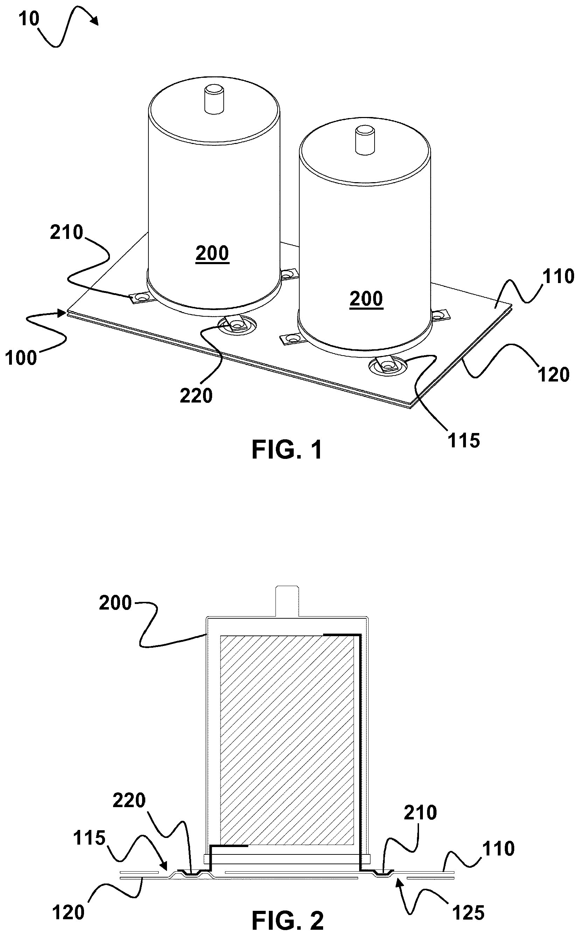

Fig. 1 zeigt eine perspektivische Ansicht einer elektronischen Baugruppe nach einem besonders bevorzugt ausgestalteten Ausführungsbeispiel. Die gezeigte elektronische Baugruppe 10 besteht aus einer als Sammelschiene 100 ausgebildeten plattenförmigen Tragstruktur und zwei darauf angeordneten Filmkondensatoren 200, die als Becherkondensatoren 200 ausgebildet sind.

Die Sammelschiene 100 weist einen eine obere Ebene ausbildenden oberen Leiter 110 und einen parallel zur oberen Ebene angeordneten, eine untere Ebene ausbildenden unteren Leiter 120 auf. Der obere Leiter 110 und der untere Leiter 120 der Sammelschiene 100 sind gegeneinander isoliert (nicht gezeigt).

Die Filmkondensatoren 200 sind als Becherkondensatoren ausgebildet und weisen zwei erste Anschlüsse 210 und zwei zweite Anschlüsse 220 auf, die am Umfang des Becherkondensators jeweils im Abstand von 90° zueinander winkelversetzt angeordnet sind.

Der jeweils erste Anschluss 210 ist mit dem in der oberen Ebene angeordneten oberen Leiter110 durch Clinchen verbunden. Der jeweils zweite Anschluss 220 ist mit dem in der unteren Ebene angeordneten unteren Leiter120 durch Clinchen verbunden.

Damit überhaupt eine Verbindung von zweitem Anschluss 220 und unterem Leiter 120 erfolgen kann, ist im oberen Leiter 110 eine Aussparung 115 vorgesehen, durch die der zweite Anschluss 220 zur Kontaktierung des unteren Leiters 120 hindurchtreten kann.

Fig. 2 zeigt die räumliche Anordnung der Kondensatoren 200 auf der Sammelschiene 100 und die räumliche Beziehung der Anschlüsse 210, 220 der Kondensatoren 200 mit den Leitern 110, 120 der Sammelschiene 100 in einer geschnittenen Seitenansicht.

Zusätzlich zu den vorstehenden Erläuterungen ist in Fig. 2 zu entnehmen, dass auch der untere Leiter 120 eine Aussparung 125 aufweist. Diese ist im Bereich der Kontaktierung des ersten Anschlusses 210 mit dem oberen Leiter 110 vorgesehen und so ausgebildet, dass ein Clinchwerkzeug, bevorzugt die Matrize des Clinchwerkzeugs, durch den unteren Leiter 120 hindurchtreten und den oberen Leiter 110 während des Clinchvorgangs lagern kann.

Es sei darauf hingewiesen, dass die Begriffe "oben" und "unten" sich allein auf die beigefügten Zeichnungen bezieht - bei der tatsächlichen Verwendung kann der dargestellte Busbar natürlich auch so eingesetzt werden, dass die Kondensatoren unterhalb der Sammelschiene angeordnet sind.

## Patentansprüche

1. Elektronische Baugruppe (10) mit einer Sammelschiene (100) und wenigstens einem mit der Sammelschiene (100) elektrisch leitend verbundenen Filmkondensator (200), wobei
- die Sammelschiene (100)
∘ einen oberen Leiter (110) und
∘ einen unterhalb des oberen Leiters (110) parallel zu diesem angeordneten unteren Leiter (120)
aufweist,
- der Filmkondensator (200)
∘ einen mit dem oberen Leiter (110) verbundenen ersten Anschluss (210) und
∘ einen mit dem unteren Leiter (120) verbundenen zweiten Anschluss (220)
aufweist, und
- der obere Leiter (110) der Sammelschiene (100) eine Aussparung (115) zur Kontaktierung des zweiten Anschlusses (220) des Filmkondensators (200) mit dem unteren Leiter (120) der Sammelschiene (100) aufweist,
**dadurch gekennzeichnet, dass**
- der erste Anschluss (210) und der zweite Anschluss (220) des Filmkondensators (200) als sich vom Filmkondensator (200) parallel zu den Leitern (110, 120) der Sammelschiene (100) erstreckende Zungen (210, 220) ausgebildet sind;
- der obere Leiter (110) mit dem ersten Anschluss (210) und der untere Leiter (120) mit dem zweiten Anschluss (220) jeweils mittels Durchsetzfügen miteinander verbunden sind; und
- der dem Filmkondensator (200) abgewandte Leiter (120) der Sammelschiene (100) im Bereich der Kontaktierung des ersten Anschlusses (210) mit dem dem Filmkondensator (200) zugewandten Leiter (110) eine Aussparung (125) zum Ansetzen eines Clinchwerkzeugs aufweist.

2. Elektronische Baugruppe (10) nach Anspruch 1, **dadurch gekennzeichnet, dass** der Filmkondensator (200) ein Becherkondensator ist.

3. Elektronische Baugruppe (10) nach einem der vorhergehenden Ansprüche, **dadurch gekennzeichnet, dass** der erste Anschluss (210) und/oder der zweite Anschluss (220) parallel zu den Leitern (110, 120) der Sammelschiene (100) umgebogen ist.

4. Elektronische Baugruppe (10) nach einem der vorhergehenden Ansprüche, **gekennzeichnet durch** eine Mehrzahl von am Umfang des Filmkondensators (200) alternierend angeordneten ersten und zweiten Anschlüssen (210, 220).

5. Elektronische Baugruppe (10) nach einem der vorhergehenden Ansprüche, **dadurch gekennzeichnet, dass** die Zungen (210, 220) verzinnt sind.

## Claims

1. Electronic assembly (10) comprising a busbar (100) and at least one film capacitor (200) electrically conductively connected to the busbar (100),
- the busbar (100) comprising
∘ an upper conductor (110) and
∘ a lower conductor (120) arranged below the upper conductor (110) and in parallel therewith,
- the film capacitor (200) comprising
∘ a first terminal (210) connected to the upper conductor (110) and
∘ a second terminal (220) connected to the lower conductor (120),
and
- the upper conductor (110) of the busbar (100) comprising a recess (115) for contact between the second terminal (220) of the film capacitor (200) and the lower conductor (120) of the busbar (100),
**characterized in that**
- the first terminal (210) and the second terminal (220) of the film capacitor (200) are designed as tongues (210, 220) extending from the film capacitor (200) in parallel with the conductors (110, 120) of the busbar (100);
- the upper conductor (110) is connected to the first terminal (210) and the lower conductor (120) is connected to the second terminal (220) by means of clinching in both cases; and
- the conductor (120) of the busbar (100) that faces away from the film capacitor (200) comprises a recess (125) for applying a clinching tool in the region in which the first terminal (210) makes contact with the conductor (110) facing the film capacitor (200).

2. Electronic assembly (10) according to claim 1, **characterized in that** the film capacitor (200) is an encased capacitor.

3. Electronic assembly (10) according to either of the preceding claims, **characterized in that** the first terminal (210) and/or the second terminal (220) is bent in parallel with the conductors (110, 120) of the busbar (100).

4. Electronic assembly (10) according to any of the preceding claims, **characterized by** a plurality of first and second terminals (210, 220) arranged alternatingly on the circumference of the film capacitor (200).

5. Electronic assembly (10) according to any of the preceding claims, **characterized in that** the tongues (210, 220) are tin-plated.

## Revendications

1. Ensemble électronique (10) comprenant une barre collectrice (100) et au moins un condensateur à film (200) relié électriquement à la barre collectrice (100),
- la barre collectrice (100) comportant
∘ un conducteur supérieur (110) et
∘ un conducteur inférieur (120) disposé au-dessous du conducteur supérieur (110) et parallèlement à celui-ci,
- le condensateur à film (200) comportant
∘ une première borne (210) reliée au conducteur supérieur (110) et
∘ une deuxième borne (220) reliée au conducteur inférieur (120), et
- le conducteur supérieur (110) de la barre collectrice (100) comportant un évidement (115) destiné à mettre la deuxième borne (220) du condensateur à film (200) en contact avec le conducteur inférieur (120) de la barre collectrice (100),
**caractérisé en ce que**
- la première borne (210) et la deuxième borne (220) du condensateur à film (200) sont conçues comme des languettes (210, 220) s'étendant depuis le condensateur à film (200) parallèlement aux conducteurs (110, 120) de la barre collectrice (100) ;
- le conducteur supérieur (110) est relié à la première borne (210) et le conducteur inférieur (120) est relié à la deuxième borne (220) à chaque fois par encliquetage ; et
- le conducteur (120) de la barre collectrice (100) qui est opposé au condensateur à film (200) comporte, dans la zone de contact de la première borne (210) avec le conducteur (110) faisant face au condensateur à film (200), un évidement (125) destiné à appliquer un outil de clinchage.

2. Ensemble électronique (10) selon la revendication 1, **caractérisé en ce que** le condensateur à film (200) est un condensateur en boîtier.

3. Ensemble électronique (10) selon l'une des revendications précédentes, **caractérisé en ce que** la première borne (210) et/ou la deuxième borne (220) sont pliées parallèlement aux conducteurs (110, 120) de la barre collectrice (100).

4. Ensemble électronique (10) selon l'une des revendications précédentes, **caractérisé par** une pluralité de capacités de première et deuxième bornes (210, 220) disposées en alternance à la périphérie du condensateur à film (200).

5. Ensemble électronique (10) selon l'une des revendications précédentes, **caractérisé en ce que** les languettes (210, 220) sont étamées.
